# EUROPÄISCHE PATENTSCHRIFT

(11) **EP 3 729 004 B1**
(45) Veröffentlichungstag und Bekanntmachung des Hinweises auf die Patenterteilung: **25.08.2021**
(21) Anmeldenummer: 18808246.5
(22) Anmeldetag: 15.11.2018
(51) Int. Cl.: G01D 21/00

(54) **VERFAHREN ZUM HERSTELLEN EINES KUNDENSPEZIFISCHEN SENSORS**
METHOD FOR PRODUCING A CUSTOMER-SPECIFIC SENSOR
PROCÉDÉ DE FABRICATION D'UN CAPTEUR SPÉCIFIQUE AU CLIENT

(30) Priorität: 22.12.2017 DE 102017131099
(43) Veröffentlichungstag der Anmeldung: 28.10.2020
(73) Patentinhaber: TrueDyne Sensors AG, 4153 Reinach (CH)
(72) Erfinder: RITTER, Josua, 4153 Reinach (CH); REITH, Patrick, 79535 Bahlingen (CH); SCHRANER, Fabio, 4055 Basel (CH)
(74) Vertreter: Andres, Angelika Maria
(86) Internationale Anmeldenummer: PCT/EP2018/081338
(87) Internationale Veröffentlichungsnummer: WO 2019/120785

(56) Entgegenhaltungen:
- DE-A1-102006 054 421
- DE-A1-102008 047 433
- DE-A1-102014 219 610

## Beschreibung

Die Erfindung bezieht sich auf ein Verfahren zum Herstellen eines kundenspezifischen Sensors.

In der Prozessautomatisierungstechnik ebenso wie in der Fertigungsautomatisierungstechnik werden üblicherweise Sensoren eingesetzt, die zur Erfassung und/oder Beeinflussung von Prozessgrößen dienen. Als Sensoren werden technische Bauteile bezeichnet, die bestimmte physikalische oder chemische Größen, z. B. Wärmemenge, Temperatur, Feuchtigkeit, Druck, Schallfeldgrößen, Helligkeit, Beschleunigung, pH-Wert, lonenstärke, elektrochemisches Potential, etc. und/oder stoffliche Beschaffenheiten der Umgebung qualitativ oder als Messgröße quantitativ erfassen oder auch beeinflussen können. Diese Größen werden mittels physikalischer oder chemischer Effekte erfasst und in ein weiter verarbeitbares elektrisches Signal umgeformt.

Derartige Sensoren werden für gewöhnlich aus Kostengründen in einer großen Stückzahl mit immer gleichen Ausstattungsmerkmalen, insbesondere hinsichtlich der zu messenden Größe und/oder der Schnittstelle zum Ausgeben der Messwerte als so genannte Standardsensoren gefertigt.

Standardsensoren sind daher nicht immer die optimale Lösung für die gewünschte Anwendung eines Kunden seins, in der bspw. eine spezifische Größe gemessen werden soll, die ein Standardsensor so nicht zur Verfügung stellt.

Aufgrund dessen entwickeln und fertigen Hersteller von Standardsensoren immer häufiger auch kundenspezifische Sensoren, die auf die Anforderungen von Kunden für eine gewünschte Anwendung zugeschnitten sind. Derartige Sensoren, die auch als OEM (engl. für "Original Equipment Manufacturer") Sensoren bezeichnet werden, sind dabei sehr stark an die bereits entwickelten Standardsensoren angelehnt und werden für gewöhnlich nur in einigen Punkten, z.B. der Messgröße die der Sensor ausgibt und/oder die Schnittstelle über die der Messwert ausgegeben wird, entsprechende der Vorgaben des Kunden verändert.

Da Kunden in der Regel nicht gewillt sind für technische Eigenschaften, die nicht benötigt oder die nur für zukünftige mögliche Erweiterungen angedacht sind, am Sensor zu zahlen, sind OEM Sensoren sehr kostensensibel. Dies führt dazu, dass OEM Sensoren für gewöhnlich relativ schlank und nur mit den nötigsten technischen Eigenschaften ausgestattet werden. Auf der anderen Seite stehen bei der Vorentwicklung solcher OEM Sensoren oftmals noch nicht alle technischen Eigenschaften fest, so dass es zwangsläufig zu einem "Over-Engineering" kommt, damit später alle vom Kunden gewünschte technische Eigenschaften zur Verfügung stehen.

Dementsprechend besteht der Wunsch kundenspezifische Sensoren bzw. OEM Sensoren möglichst schlank herzustellen.

DE 10 2014 219610 A1 offenbart ein Verfahren zum Herstellen eines kundenspezifischen Sensors basierend auf einem Standardsensor.

Es ist daher eine Aufgabe der Erfindung, ein Verfahren zum Herstellen eines kundenspezifischen Sensors vorzuschlagen, mit dem ein möglichst schlanker kundenspezifischer Sensor hergestellt werden kann.

Die Aufgabe wird erfindungsgemäß durch das Verfahren gemäß Patentanspruch 1 gelöst. Das erfindungsgemäße Verfahren zum Herstellen eines kundenspezifischen Sensors basierend auf einem Standardsensor mit Hilfe eines Sensorentwicklungspakets sieht vor, dass der Standardsensor wenigstens ein Sensorelement zum Erfassen einer Prozessgröße, eine erste Recheneinheit, die dazu eingerichtet ist, anhand eines Standardalgorithmus einen Standardmesswert basierend auf der erfassten Prozessgröße zu berechnen und eine Standardschnittstelle zum Ausgeben von Standardmesswerten aufweist, wobei das Sensorentwicklungspaket wenigstens den Standardsensor und eine Anpassungseinheit umfasst, wobei die Anpassungseinheit zumindest eine zu der Standardschnittstelle korrespondierende erste Schnittstelle zum Übertragen der Standardmesswert, eine zweite Recheneinheit, die dazu eingerichtet ist, anhand eines anpassbaren Anpassungsalgorithmus kundenspezifisch angepasste Messwerte basierend auf den Standardmesswerten zu berechnen und eine kundenspezifisch anpassbare Schnittstelle zum Ausgeben der kundenspezifisch angepassten Messwerte umfasst und wobei das Verfahren zum Herstellen des kundenspezifischen Sensors zumindest die folgenden Schritte aufweist:
- Anpassen der Anpassungseinheit an eine von einem Kunden gewünschte Anwendung in der Form, dass zumindest der Anpassungsalgorithmus und/oder die kundenspezifische anpassbare Schnittstelle der Anpassungseinheit auf die vom Kunden gewünschte Anwendung abgestimmt wird;
- Übermittlung des Sensorentwicklungspakets an den Kunden, so dass der Kunde das Sensorentwicklungspaket in die gewünschte Anwendung einbringen kann;
- Überprüfen des in die gewünschte Anwendung eingebrachten Sensorentwicklungspakets durch den Kunden in der Form, dass der Kunde die durch das Sensorentwicklungspaket in der gewünschten Anwendung erzeugten kundenspezifisch angepassten Messwerte mit Erwartungswerten vergleicht;
- Herstellen des kundenspezifischen Sensors in der Form, dass der kundenspezifische Sensor zumindest eine Recheneinheit mit einem kundenspezifischen Algorithmus, der hinsichtlich der Funktion der Kombination aus dem Standardalgorithmus des Standardsensors und dem Anpassungsalgorithmus der Anpassungseinheit entspricht, und eine kundenspezifische Schnittstelle, die der für die gewünschte Anwendung des Kunden angepassten Schnittstelle der Anpassungseinheit entspricht, umfasst, so dass der kundenspezifisch hergestellte Sensor die kundenspezifischen Messwerte über die kundenspezifische Schnittstelle ausgibt.

Erfindungsgemäß wird also vorgeschlagen mittels eines Sensorentwicklungspakets, welches aus einer Anpassungseinheit und eines Standardsensor besteht, dieses in einer Anwendung beim Kunden zu testen. Hierfür wird die Anpassungseinheit im Vorfeld zuerst auf die Bedürfnisse des Kunden abgestimmt. Bspw. werden die vom Kunden gewünschte Schnittstelle festgelegt und der Anpassungsalgorithmus so angepasst, dass die vom Kunden gewünschte Messgröße ausgegeben wird. Der Kunde hat anschließend die Möglichkeit den Standardsensor in Kombination mit der Anpassungseinheit als Sensorentwicklungspaket in der gewünschten Anwendung bei sich zu testen.

Nach dem Testen des Standardsensors der mittels der Anpassungseinheit genau auf die Wünsche des Kunden abgestimmt ist, kann ein kundenspezifischer Sensor mit genau den technischen Eigenschaften, wie der Standardsensor in Kombination mit der Anpassungseinheit aufweist, entwickelt und hergestellt werden.

Dieses Vorgehen bietet den Vorteil, dass der Kunde in einer frühen Phase des Entwicklungsprozesses die Möglichkeit hat, das Sensorentwicklungspaket, welches sich so verhält wie ein späterer OEM Sensor, zu testen. Darüber hinaus bietet das Vorgehen den Vorteil, dass der zu entwickelnde und herzustellende OEM Sensor nicht mit technischen Eigenschaften überfrachtet werden muss, da die genau benötigten technischen Eigenschaften durch das Testen in der Anwendung frühzeitig bekannt sind bzw. werden.

Eine vorteilhafte Ausführungsform des erfindungsgemäßen Verfahrens sieht ferner den Schritt des Optimierens der Anpassungseinheit in dem Fall, dass die durch das Sensorentwicklungspaket in der gewünschten Anwendung erzeugten kundenspezifisch angepassten Messwerte nicht den Erwartungswerten entsprechen vor, wobei das Optimieren in der Form erfolgt, dass zumindest der Anpassungsalgorithmus und/oder die kundenspezifische anpassbare Schnittstelle der Anpassungseinheit erneut auf die gewünschte Anwendung abgestimmt wird.

Wiederum eine weitere vorteilhafte Ausführungsform des erfindungsgemäßen Verfahrens sieht vor, dass die Anpassungseinheit derartig ausgestaltet ist, dass mehrere Standardsensoren anschließbar sind und der Anpassungsalgorithmus derartig angepasst wird, dass der kundenspezifisch angepasste Messwert basierend auf den Standardmesswerten der mehreren Standardsensoren berechnet wird.

Eine weitere vorteilhafte Ausführungsform des erfindungsgemäßen Verfahrens sieht vor, dass als Anpassungseinheit ein Einplatinencomputer, insbesondere ein Raspberry Pi oder davon abgewandelte Variante, verwendet wird.

Eine weitere vorteilhafte Ausführungsform des erfindungsgemäßen Verfahrens sieht vor, dass die Standardschnittstelle und die erste Schnittstelle als I2C-Schnittstelle ausgebildet sind.

Eine weitere vorteilhafte Ausführungsform des erfindungsgemäßen Verfahrens sieht vor, dass die kundenspezifisch anpassbare Schnittstelle der Anpassungseinheit durch mehrere individuelle jeweils unterschiedliche Schnittstellen realisiert ist und die kundenspezifische Anpassung durch das Auswählen einer einzelnen Schnittstelle durchgeführt wird.

Die Erfindung wird anhand der nachfolgenden Zeichnung näher erläutert. Es zeigt:

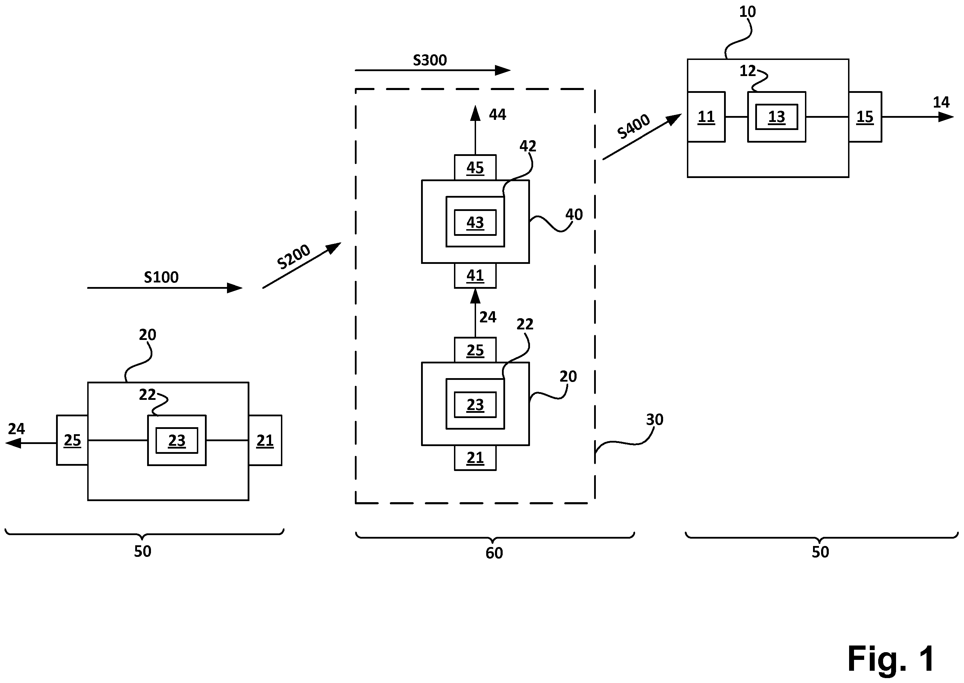

Fig. 1: einen schematischen Verfahrensablauf des erfindungsgemäßen Verfahrens.

Figur 1 zeigt einen schematischen Verfahrensablauf des erfindungsgemäßen Verfahrens, bei dem mit Hilfe eines Sensorentwicklungspaktes 30, welches einen Standardsensor 20 und eine Anpassungseinheit 40 umfasst, ein kundenspezifischer Sensor 10 hergestellt wird.

Der Standardsensor 20 umfasst dabei zumindest ein Sensor- bzw. Wandlerelement 21, eine erste Recheneinheit 22, bspw. einen Mikroprozessor, auf der ein Standardalgorithmus 23 implementiert ist, und eine Standardschnittstelle 25 über die die Standardmesswerte 24 ausgegeben werden. Über das Sensor- bzw. Wandlerelement 21 wird eine physikalische und/oder chemische Größe in ein weiterverarbeitbares elektrisches Signal gewandelt, welches der ersten Recheneinheit 22 zugeführt ist, so dass über den Standardalgorithmus 23 entsprechende Standardmesswerte 24 ermittelt bzw. berechnet werden. Die Standardmesswerte 24 werden wiederum über eine Standardschnittstelle 25 ausgegeben bzw. stehen dort zum Abgriff zur Verfügung. Bspw. kann der in Fig. 1 dargestellte Standardsensor 20 derartig ausgebildet sein, dass der Standardsensor 20 in einem Abfüllprozess, bei dem ein Medium in ein Behältnis gefüllt wird, als Anwendung, die Größen Dichte, Temperatur und Druck des Mediums bestimmt. Die Größen können bspw. über eine RS232 Schnittstelle als Standardschnittstelle 25 zur Verfügung gestellt werden.

Die Anpassungseinheit 40 umfasst zumindest eine erste Schnittstelle 41, eine zweite Recheneinheit 42, bspw. einen Mikroprozessor, auf der ein Anpassungsalgorithmus 43 implementiert ist, und eine kundenspezifische anpassbare Schnittstelle 45 über die die kundenspezifischen angepassten Messwerte 44 ausgegeben werden. Die erste Schnittstelle 41 der Anpassungseinheit 40 ist dabei derartig ausgebildet, dass diese kompatible zu der Standardschnittstelle 25 des Standardsensors 20 ist, bspw. als R232 oder auch I2C Schnittstelle, so dass die Standardmesswerte 24 übertragbar sind. Über den Anpassungsalgorithmus 43 können die von dem Standardsensor 20 erhaltenen bzw. übertragenen Standardmesswerte 24 dahingehend verarbeitet werden, dass diese kundenspezifisch angepasst bzw. modifiziert werden können. Die kundenspezifisch angepassten Messwerte 44 werden wiederum von der Anpassungseinheit 40 über eine kundenspezifisch anpassbare Schnittstelle 45 zur Verfügung gestellt. Die kundenspezifische anpassbare Schnittstelle 45 der Anpassungseinheit 40 kann bspw. dahingehend realisiert werden, dass die Anpassungseinheit 40 eine Vielzahl von vordefinierten Schnittstellen, bspw. WLAN; USB, Bluetooth oder eine von diesen abgewandelte Variante, etc., umfasst und je nach Kundenwunsch eine (einzige) entsprechende Schnittstelle als kundenspezifisch angepasste Schnittstelle 45 ausgewählt wird. Vorzugsweise kann die Anpassungseinheit 40 als ein Einplatinencomputer, insbesondere in Form eines Raspberry Pi Boards, ausgebildet sein, welches eine Vielzahl von vordefinierten Schnittstellen aufweist.

Zur Verdeutlichung des erfindungsgemäßen Verfahrens sei angenommen. dass der Kunde als gewünschte Anwendung 60, das Abfüllen eines Mediums in ein Behältnis, im Fokus hat und der Kunde neben den Größen Dichte, Temperatur und Druck, die der Standardsensor 20 liefert, auch noch die Größe Konzentration des Mediums beim Abfüllprozess wissen möchte. Ferner sei angenommen, dass der Kunde die Größen nicht über eine RS232 Schnittstelle, die der Standardsensor 20 bereitstellt, zur Verfügung gestellt bekommen möchte, sondern über eine USB Schnittstelle.

Das erfindungsgemäße Verfahren sieht nun in einem ersten Verfahrensschritt S100 vor, dass die Anpassungseinheit 40 in Kombination mit dem Standardsensor 20 zu dem Sensorentwicklungspaket 30 zusammengeführt und auf eine vom Kunden gewünschte Anwendung 60 angepasst wird. Dieser Vorgang wird vorzugsweise beim Sensorhersteller im Vorfeld, also bevor das Sensorentwicklungspaket 30 an den Kunden überliefert wird, durchgeführt. Denkbar ist natürlich auch, dass dieser Vorgang beim Kunden bzw. bei der gewünschten Anwendung 60, also direkt Vorort, durchgeführt wird. Das Sensorentwicklungspaket 30 umfasst, wie bereits erwähnt, den Standardsensor 20, wie er üblicherweise vom Sensorhersteller in vielfacher Ausfertigung hergestellt wird, und eine Anpassungseinheit 40, die an die gewünschte Anwendung 60 angepasst wird.

Um bei dem zuvor genannten Beispiel zu bleiben, wird bei diesem die Anpassungseinheit 40 derartig angepasst, dass der Anpassungsalgorithmus 43 aus den von dem Standardsensor 20 überlieferten Größen Dichte, Temperatur und Druck zusätzlich die Konzentration als weitere Größe berechnet und diese über die USB Schnittstelle der Anpassungseinheit 40 zur Verfügung stellt. Aufgrund der Anpassungseinheit 40 ergibt sich somit in Kombination mit dem Standardsensor 20 ein Sensorentwicklungspaket 30 welches auf die gewünschte Anwendung 60 angepasst ist.

Das erfindungsgemäße Verfahren sieht in einem zweiten Verfahrensschritt S200 vor, dass das auf die gewünschte Anwendung 60 angepasste Sensorentwicklungspaket 30 in die Anwendung 60 eingebracht wird, so dass der Kunde das Sensorentwicklungspaket 30 testen kann. Neben dem Berechnungsmodell, welches durch den Anpassungsalgorithmus 43 abgebildet wird, lässt sich so die kundenspezifisch angepasste Schnittstelle 45 in der Anwendung 60 testen.

In einem nächsten Verfahrensschritt S300 kann der Kunde das Sensorentwicklungspaket 30 in der gewünschten Anwendung 60 hinsichtlich seiner technischen Spezifikation überprüfen.

In einem nächsten optionalen Verfahrensschritt kann vorgesehen sein, dass in dem Fall, dass das Sensorentwicklungspaket 30 nicht den technischen Spezifikationen des Kunden genügt, die Anpassungseinheit 40 erneut angepasst wird. Hierbei kann wiederum die Schnittstelle und/oder der Anpassungsalgorithmus angepasst werden. Dieser optionale Verfahrensschritt wird solange wiederholt, bis das in die Anwendung 60 eingebrachte Sensorentwicklungspaket 30 der technischen Spezifikation des Kunden genügt.

Sobald das in die Anwendung 60 integrierte Sensorentwicklungspaket 30 der technischen Spezifikation des Kunden entspricht, wird in einem nächsten Verfahrensschritt S400 ein kundenspezifischer Sensor 10 entsprechend des Sensorentwicklungspakets 30 durch den Sensorhersteller 50 hergestellt. Der hergestellte kundenspezifische Sensor 10 umfasst zumindest eine Recheneinheit 12 mit einem kundenspezifischen Algorithmus 13, der hinsichtlich der Funktion der Kombination aus dem Standardalgorithmus 23 des Standardsensors 20 und dem Anpassungsalgorithmus 43 der Anpassungseinheit 40 entspricht. Entsprechend dem zuvor genannten Beispiel, ist der kundenspezifische Algorithmus 13 dazu eingerichtet, als kundenspezifische Messwerte 14 die Größen Dichte, Temperatur, Druck und zusätzlich die Konzentration auszugeben.

Ferner umfasst der kundenspezifisch hergestellte Sensor 10 eine (einzige) kundenspezifische Schnittstelle 15, die der für die gewünschte Anwendung 60 des Kunden angepassten Schnittstelle 45 der Anpassungseinheit 40 entspricht, so dass die kundenspezifischen Messwerte 14 über die kundenspezifische Schnittstelle 15 ausgegeben werden.

### Bezugszeichenliste

- 10: Kundenspezifischer Sensor
- 11: Sensorelement
- 12: Recheneinheit
- 13: Kundenspezifischer Algorithmus
- 14: Kundenspezifischer Messwert
- 15: Kundenspezifische Schnittstelle
- 20: Standardsensor
- 21: Sensorelement des Standardsensors
- 22: Erste Recheneinheit
- 23: Standardalgorithmus
- 24: Standardmesswert
- 25: Standardschnittstelle
- 30: Sensorentwicklungspaket
- 40: Anpassungseinheit
- 41: Erste Schnittstelle
- 42: Zweite Recheneinheit
- 43: anpassbarer Anpassungsalgorithmus
- 44: kundenspezifisch angepassten Messwert
- 45: kundenspezifisch anpassbare Schnittstelle
- 50: Sensorhersteller
- 60: Gewünschte Anwendung beim Kunden
- S100: Anpassen der Anpassungseinheit
- S200: Einbringen des Sensorentwicklungspaketes in die gewünschte Anwendung
- S300: Überprüfen des in die gewünschte Anwendung eingebrachten Sensorentwicklungspakets durch den Kunden
- S400: Herstellen des kundenspezifischen Sensors

## Patentansprüche

1. Verfahren zum Herstellen eines kundenspezifischen Sensors (10) basierend auf einem Standardsensor (20) mit Hilfe eines Sensorentwicklungspakets (30), wobei der Standardsensor (20) wenigstens ein Sensorelement (21) zum Erfassen einer Prozessgröße, eine erste Recheneinheit (22), die dazu eingerichtet ist, anhand eines Standardalgorithmus (23) einen Standardmesswert (24) basierend auf der erfassten Prozessgröße zu berechnen und eine Standardschnittstelle (25) zum Ausgeben von Standardmesswerten (24) aufweist, wobei das Sensorentwicklungspaket (30) wenigstens den Standardsensor (20) und eine Anpassungseinheit (40) umfasst, wobei die Anpassungseinheit (40) zumindest eine zu der Standardschnittstelle (25) korrespondierende erste Schnittstelle (41) zum Übertragen der Standardmesswert (24), eine zweite Recheneinheit (42), die dazu eingerichtet ist, anhand eines anpassbaren Anpassungsalgorithmus (43) kundenspezifisch angepasste Messwerte (44) basierend auf den Standardmesswerten (24) zu berechnen und eine kundenspezifisch anpassbare Schnittstelle (45) zum Ausgeben der kundenspezifisch angepassten Messwerte (46) umfasst und wobei das Verfahren zum Herstellen des kundenspezifischen Sensors (10) zumindest die folgenden Schritte aufweist:
- Anpassen der Anpassungseinheit an eine von einem Kunden gewünschte Anwendung (S100) in der Form, dass zumindest der Anpassungsalgorithmus (43) und/oder die kundenspezifische anpassbare Schnittstelle (45) der Anpassungseinheit (40) auf die vom Kunden gewünschte Anwendung abgestimmt wird;
- Einbringen des Sensorentwicklungspakets (30) in die gewünschte Anwendung des Kunden (S200), so dass der Kunde das Sensorentwicklungspaket (30) in der Anwendung testen kann;
- Überprüfen des in die gewünschte Anwendung eingebrachten Sensorentwicklungspakets durch den Kunden (S300) in der Form, dass der Kunde das Sensorentwicklungspaket (30) in der gewünschten Anwendung auf eine von ihm vorgegeben technische Spezifikation hin überprüft;
- Herstellen des kundenspezifischen Sensors (S400) in dem Fall, dass das Sensorentwicklungspaket der technischen Spezifikation des Kunden genügt, wobei der kundenspezifische Sensor in der Form hergestellt wird, dass der kundenspezifische Sensor (10) zumindest eine Recheneinheit (12) mit einem kundenspezifischen Algorithmus (13), der hinsichtlich der Funktion der Kombination aus dem Standardalgorithmus (23) des Standardsensors (20) und dem Anpassungsalgorithmus (43) der Anpassungseinheit (40) entspricht, und eine kundenspezifische Schnittstelle (15), die der für die gewünschte Anwendung des Kunden angepassten Schnittstelle der Anpassungseinheit (45) entspricht, umfasst, so dass der kundenspezifisch hergestellte Sensor (10) die kundenspezifischen Messwerte (14) über die kundenspezifische Schnittstelle (15) ausgibt.

2. Verfahren nach Anspruch 1, ferner aufweisend den Schritt des Optimierens der Anpassungseinheit (40) in dem Fall, dass die durch das Sensorentwicklungspaket (30) in der gewünschten Anwendung erzeugten kundenspezifisch angepassten Messwerte (44) nicht den Erwartungswerten entsprechen, wobei das Optimieren in der Form erfolgt, dass zumindest der Anpassungsalgorithmus (43) und/oder die kundenspezifische anpassbare Schnittstelle (45) der Anpassungseinheit (40) erneut auf die gewünschte Anwendung abgestimmt wird.

3. Verfahren nach Anspruch 1 oder 2, wobei die Anpassungseinheit (40) derartig ausgestaltet ist, dass mehrere Standardsensoren anschließbar sind und der Anpassungsalgorithmus (43) derartig angepasst wird, dass der kundenspezifisch angepasste Messwert (44) basierend auf den Standardmesswerten (24) der mehreren Standardsensoren berechnet wird.

4. Verfahren nach einem oder mehreren der vorhergehenden Ansprüche, wobei als Anpassungseinheit (40) ein Einplatinencomputer, insbesondere ein Raspberry Pi oder davon abgewandelte Variante, verwendet wird.

5. Verfahren nach einem oder mehreren der vorhergehenden Ansprüche, wobei die Standardschnittstelle (25) und die erste Schnittstelle (41) als I2C-Schnittstelle ausgebildet sind.

6. Verfahren nach einem oder mehreren der vorhergehenden Ansprüche, wobei die kundenspezifisch anpassbare Schnittstelle (45) der Anpassungseinheit (40) durch mehrere individuelle jeweils unterschiedliche Schnittstellen realisiert ist und die kundenspezifische Anpassung durch das Auswählen einer einzelnen Schnittstelle durchgeführt wird.

## Claims

1. Procedure for the production of a customer-specific sensor (10), based on a standard sensor (20) with the aid of a sensor development package (30), wherein the standard sensor (20) has at least a sensor element (21) for measuring a process variable, a first computing unit (22), which is designed to use a standard algorithm (23) to calculate a standard measured value (24) on the basis of the measured process variable, and a standard interface (25) designed to display standard measured values (24), wherein the sensor development package (30) at least comprises the standard sensor (20) and an adaptation unit (40), wherein the adaptation unit (40) has at least a first interface (41) corresponding to the standard interface (25), wherein said first interface is designed to transmit the standard measured value (24), a second computing unit (42), which is designed to use an adaptable adaptation algorithm (43) to calculate measured values (44), adapted in a manner specific to the customer, on the basis of the standard measured values (24), and a customizable interface (45) which is designed to display the measured values (46) specifically adapted to the customer, and wherein the procedure for the production of the customer-specific sensor (10) comprises at least the following steps:
- Adaptation of the adaptation unit to an application desired by the customer (S100) in such a way that at least the adaptation algorithm (43) and/or the customizable interface (45) of the adaptation unit (40) is adapted to the application desired by the customer;
- Introduction of the sensor development package (30) into the application desired by the customer (S200) so that the customer can test the sensor development package (30) in the application;
- Testing by the customer (S300) of the sensor development package (30) introduced into the desired application in such a way that customer checks the sensor development package (30) in the desired application with regard to a technical specification specified by the customer;
- Fabrication of the customer-specific sensor (S400) in the event that the sensor development package meets the customer's technical specification, wherein the customer-specific sensor is made in such a way that the customer-specific sensor (10) comprises at least a computing unit (12) with a customer-specific algorithm (13), which, in terms of function, corresponds to the combination of the standard algorithm (23) of the standard sensor (20) and the adaptation algorithm (43) of the adaptation unit (40), and a customer-specific interface (15) which corresponds to the interface of the adaptation unit (45) adapted for the desired application of the customer, in such a way that the sensor (10) produced in a customized manner outputs the customer-specific measured values (14) via the customer-specific interface (15).

2. Procedure as claimed in Claim 1, further comprising the step to optimize the adaptation unit (40) in the event that the measured values (44) adapted in a customized manner and generated by the sensor development package (30) in the desired application do not correspond to the expected values, wherein optimization takes place in such a manner that at least the adaptation algorithm (43) and/or the customizable interface (45) of the adaptation unit (40) is again adapted to the desired application.

3. Procedure as claimed in Claim 1 or 2, wherein the adaptation unit (40) is designed in such a way that several standard sensors can be connected, and the adaptation algorithm (43) is adapted in such a way that the measured value (44) adapted in a customer-specific manner is calculated on the basis of the standard measured values (24) of the several standard sensors.

4. Procedure as claimed in one or more of the previous claims, wherein a single-board computer, particularly a Raspberry Pi or a variant therefore, is used as the adaptation unit (40).

5. Procedure as claimed in one or more of the previous claims, wherein the standard interface (25) and the first interface (41) are designed as an I2C interface.

6. Procedure as claimed in one or more of the previous claims, wherein the customizable interface (45) of the adaptation unit (40) is implemented by several individual and different interfaces and the customized adaptation is performed by selecting an individual interface.

## Revendications

1. Procédé destiné à la fabrication d'un capteur (10) spécifique au client, sur la base d'un capteur standard (20) à l'aide d'un pack de développement de capteurs (30), le capteur standard (20) présentant au moins un élément de capteur (21) pour la mesure d'une grandeur de process, une première unité de calcul (22), laquelle unité est conçue pour calculer, au moyen d'un algorithme standard (23), une valeur mesurée standard (24) sur la base de la grandeur de process mesurée, et une interface standard (25) destinée à l'affichage des valeurs mesurées standard (24), le pack de développement de capteurs (30) comprenant au moins le capteur standard (20) et une unité d'adaptation (40), l'unité d'adaptation (40) comportant au moins une première interface (41) correspondant à l'interface standard (25), laquelle première interface est destinée à la transmission des valeurs mesurées standard (24), une deuxième unité de calcul (42), laquelle est conçue pour calculer, au moyen d'un algorithme d'adaptation (43) adaptable, des valeurs mesurées (44) adaptées de manière spécifique au client, sur la base des valeurs mesurées standard (24), et une interface (45) adaptable de manière spécifique au client, laquelle interface est destinée à l'affichage des valeurs mesurées (46) adaptées de manière spécifique au client, et le procédé de fabrication du capteur (10) spécifique au client présentant au moins les étapes suivantes :
- Adaptation de l'unité d'adaptation à une application souhaitée par le client (S100) de telle sorte qu'au moins l'algorithme d'adaptation (43) et/ou l'interface adaptable de manière spécifique au client (45) de l'unité d'adaptation (40) est adapté à l'application souhaitée par le client ;
- Insertion du pack de développement de capteurs (30) dans l'application souhaitée par le client (S200), afin que le client puisse tester le pack de développement de capteurs (30) dans l'application ;
- Vérification par le client (S300) du pack de développement de capteurs (30) inséré dans l'application souhaitée, de telle sorte que le client vérifie le pack de développement de capteurs (30) dans l'application souhaitée par rapport à une spécification technique fournie par le client ;
- Fabrication du capteur (S400) spécifique au client dans le cas où le pack de développement de capteurs satisfait à la spécification technique du client, le capteur spécifique au client étant fabriqué de telle sorte que le capteur (10) spécifique au client comprenne au moins une unité de calcul (12) avec un algorithme spécifique au client (13), qui correspond fonctionnellement à la combinaison de l'algorithme standard (23) du capteur standard (20) et de l'algorithme d'adaptation (43) de l'unité d'adaptation (40), et une interface (15) spécifique au client qui correspond à l'interface de l'unité d'adaptation (45) adaptée à l'application souhaitée par le client, de telle sorte que le capteur (10) fabriqué de manière spécifique au client émette les valeurs mesurées (14) spécifiques au client via l'interface (15) spécifique au client.

2. Procédé selon la revendication 1, comprenant en outre l'étape consistant à optimiser l'unité d'adaptation (40) dans le cas où les valeurs mesurés (44) adaptées de manière spécifique au client et générées par le pack de développement de capteurs (30) dans l'application souhaitée ne correspondent pas aux valeurs attendues, l'optimisation intervenant sous la forme d'un nouveau réglage d'au moins l'algorithme d'adaptation (43) et/ou l'interface (45) adaptable de manière spécifique au client de l'unité d'adaptation (40) à l'application souhaitée.

3. Procédé selon la revendication 1 ou 2, pour lequel l'unité d'adaptation (40) est conçue de telle sorte qu'une pluralité de capteurs standard peuvent être connectés, et pour lequel l'algorithme d'adaptation (43) est adapté de telle sorte que la valeur mesurée (44) adaptée de manière spécifique au client est calculée sur la base des valeurs mesurées standard (24) de la pluralité de capteurs standard.

4. Procédé selon l'une ou plusieurs des revendications précédentes, pour lequel on utilise comme unité d'adaptation (40) un ordinateur monocarte, notamment un Raspberry Pi ou une variante dérivée de celui-ci.

5. Procédé selon l'une ou plusieurs des revendications précédentes, pour lequel l'interface standard (25) et la première interface (41) sont conçues en tant qu'interface I2C.

6. Procédé selon l'une ou plusieurs des revendications précédentes, pour lequel l'interface (45) adaptable de manière spécifique au client de l'unité d'adaptation (40) est réalisée par une pluralité d'interfaces individuelles respectives différentes et l'adaptation spécifique au client est effectuée en sélectionnant une interface unique.
